# EUROPEAN PATENT APPLICATION

(11) **EP 4 286 071 A1**
(43) Date of publication of application: **06.12.2023**
(21) Application number: 23735216.6
(22) Date of filing: 08.03.2023
(51) Int. Cl.: B21J 5/10, B21K 1/46, B23P 15/00, F16B 35/00

(54) **BANJO BOLT MANUFACTURING METHOD**

(30) Priority: 19.04.2022 JP 2022068772
(71) Applicant: Matsumoto Heavy Industry Co., Ltd., Kure-shi, Hiroshima 737-1207 (JP)
(72) Inventor: YOKOTA, Koichi, Kure-shi, Hiroshima 737-1207 (JP); SHIMOKAWA, Shinya, Kure-shi, Hiroshima 737-1207 (JP)
(74) Representative: HGF
(86) International application number: PCT/JP2023/008885
(87) International publication number: WO 2023/203909

(57) **Abstract**

A method of manufacturing a banjo bolt including a shaft portion including a vertical hole provided in the shaft portion and extending in a first direction, includes forming a first lateral hole and a second lateral hole by processing the shaft portion from a first side in a second direction crossing the first direction, the first lateral hole extending in the second direction and connecting an outside of the shaft portion and the vertical hole, the second lateral hole being located on an opposite side of the first lateral hole with respect to the vertical hole and extending in the second direction and connecting the outside of the shaft portion and the vertical hole, the second lateral hole being larger than the first lateral hole and overlapping the entire first lateral hole when viewed along the second direction, and forming a third lateral hole by processing a portion of the shaft portion where the first lateral hole is formed from a second side in the second direction through the second lateral hole, the third lateral hole being larger than the first lateral hole and similar to the second lateral hole when viewed along the second direction.

## Description

### TECHNICAL FIELD

The present disclosure relates to a method of manufacturing a banjo bolt.

### BACKGROUND ART

Patent Document 1 discloses a union bolt. The union bolt of Patent Document 1 includes a head portion, and a shaft portion provided at a lower end of the head portion and provided with an external thread groove on an outer peripheral surface thereof. The shaft portion includes a vertical hole provided inside the shaft portion and through which the fluid flows in a direction substantially along an axial direction, and a lateral hole provided substantially orthogonal to the axial direction so that the vertical hole can communicate with an outside.

### CITATION LIST

### PATENT DOCUMENT

Patent Document 1: JP 2001-289227 A

### SUMMARY

### PROBLEMS TO BE SOLVED

In the union bolt of Patent Document 1, since a lateral hole is processed from an outside of the bolt toward an inside of the bolt, burrs or barbs may be generated in a portion where a vertical hole and a lateral hole intersect in the bolt.

An object of the present disclosure is to provide a method of manufacturing a banjo bolt capable of preventing burrs and barbs to be generated in a portion where a vertical hole and a lateral hole intersect.

### SOLUTION TO PROBLEM

A manufacturing method according to one aspect of the present disclosure is a method of manufacturing a banjo bolt that includes a shaft portion including a vertical hole, the vertical hole being provided in the shaft portion and extending in a first direction, the method including:
forming a first lateral hole and a second lateral hole by processing the shaft portion from one side of a second direction crossing the first direction, the first lateral hole extending in the second direction and connecting an outside of the shaft portion and the vertical hole, the second lateral hole being located on an opposite side of the first lateral hole with respect to the vertical hole and extending in the second direction and connecting the outside of the shaft portion and the vertical hole, the second lateral hole being larger than the first lateral hole and overlapping the entire first lateral hole when viewed along the second direction; and
forming a third lateral hole by processing a portion of the shaft portion where the first lateral hole is formed from the other side in the second direction through the second lateral hole, the third lateral hole being larger than the first lateral hole and similar to the second lateral hole when viewed along the second direction.

### ADVANTAGEOUS EFFECTS OF INVENTION

According to the manufacturing method of the above aspect, a banjo bolt can be manufactured so as not to prevent burrs and barbs to be generated in a portion where a vertical hole and a lateral hole intersect.

### BRIEF DESCRIPTION OF THE DRAWINGS

FIG. 1 is a perspective view showing an example of a banjo bolt manufactured by a manufacturing method according to an embodiment of the present disclosure.
FIG. 2 is a partial cross-sectional view of the banjo bolt of FIG. 1.
FIG. 3 is a flowchart for explaining a manufacturing method according to an embodiment of the present disclosure.
FIG. 4 is a flowchart for explaining step S2 of FIG. 3.
FIG. 5 is a flowchart for explaining step S3 of FIG. 3.
FIG. 6 is a first schematic cross-sectional view for explaining the flowchart of FIG. 4.
FIG. 7 is a second schematic cross-sectional view for explaining the flowchart of FIG. 4.
FIG. 8 is a third schematic cross-sectional view for explaining the flowchart of FIG. 4.
FIG. 9 is a fourth schematic cross-sectional view for explaining the flowchart of FIG. 4.
FIG. 10 is a fifth schematic cross-sectional view for explaining the flowchart of FIG. 4.
FIG. 11 is a sixth schematic cross-sectional view for explaining the flowchart of FIG. 4.
FIG. 12 is a seventh schematic cross-sectional view for explaining the flowchart of FIG. 4.
FIG. 13 is a first schematic cross-sectional view for explaining the flowchart of FIG. 5.
FIG. 14 is a second schematic cross-sectional view for explaining the flowchart of FIG. 5.
FIG. 15 is a third schematic cross-sectional view for explaining the flowchart of FIG. 5.
FIG. 16 is a fourth schematic cross-sectional view for explaining the flowchart of FIG. 5.
FIG. 17 is a first schematic cross-sectional view for explaining a modification of the manufacturing method of FIG. 3.
FIG. 18 is a second schematic cross-sectional view for explaining a modification of the manufacturing method of FIG. 3.
FIG. 19 is a third schematic cross-sectional view for explaining a modification of the manufacturing method of FIG. 3.

### DETAILED DESCRIPTION

Hereinafter, an example of the present disclosure will be described with reference to the accompanying drawings. Note that the following description is merely exemplary in nature, and is not intended to limit the present disclosure, its application, or its use. Furthermore, the drawings are schematic, and ratios of dimensions and the like do not necessarily match actual ones.

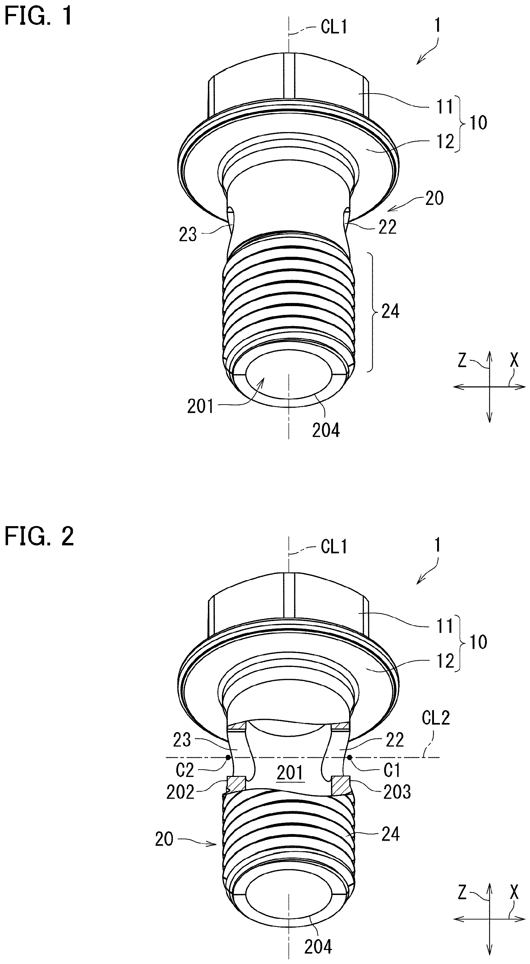

FIGS. 1 and 2 illustrate an example of a banjo bolt 1 manufactured by a manufacturing method according to an embodiment of the present disclosure. The banjo bolt 1 includes a head portion 10 and a shaft portion 20, and is made of a metal material. The shaft portion 20 has, for example, a substantially cylindrical shape and extends along a first direction (for example, in the Z direction,).

As illustrated in FIG. 1, the head portion 10 includes, for example, a screw head 11 having a substantially hexagonal columnar shape and a flange 12, and is provided at one end of the shaft portion 20 in the first direction Z. The screw head 11 is located farther from the other end of the shaft portion 20 in the first direction Z than the flange 12. The flange 12 has, for example, a substantially annular shape and is located around a center line CL1 extending in the first direction Z of the shaft portion 20.

As shown in FIG. 2, the shaft portion 20 includes a vertical hole 201 extending along the first direction Z and two lateral holes 22 and 23 extending in a second direction (for example, in the X direction) intersecting the first direction Z. An opening 204 is provided at the other end of the shaft portion 20 in the first direction Z. The vertical hole 201 has, for example, a substantially circular shape, extends from the head portion 10 to the other end of the shaft portion 20 in the first direction Z, and is connected to the opening 204. Each of the lateral holes 22 and 23 has, for example, a substantially circular shape and penetrates the shaft portion 20 in the second direction X to connect an outside of the shaft portion 20 and the vertical hole 201.

As an example, in the banjo bolt 1, when viewed along the second direction X, a center C1 of the lateral hole 22 and a center C2 of the lateral hole 23 are located on the same straight line CL2, and the lateral hole 22 is configured to overlap the entire lateral hole 23. That is, the lateral hole 22 has a size equal to or larger than that of the lateral hole 23. The lateral hole 22 is an example of a second lateral hole, and the lateral hole 23 is an example of a third lateral hole.

An external threaded portion 24 is provided on an outer surface 203 around the center line CL 1 of the shaft portion 20. The external threaded portion 24 is located between the other end of the shaft portion 20 in the first direction Z and the lateral holes 22 and 23 in the first direction Z.

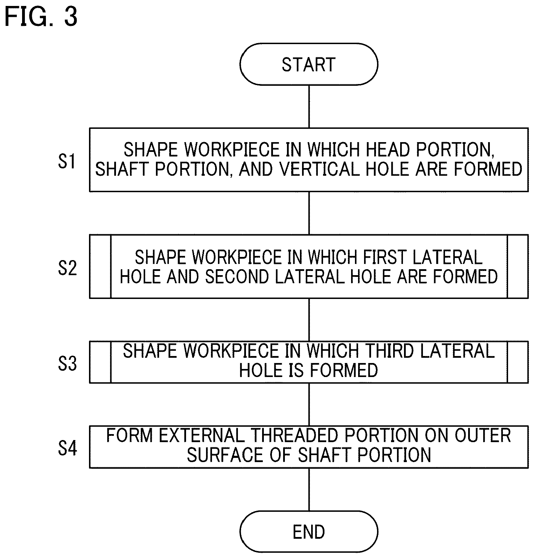

An example of a method of manufacturing the banjo bolt 1 will be described with reference to FIGS. 3 to 16. In the manufacturing method described below, all processes may be performed automatically by a computer as a manufacturer, or some or all processes may be performed manually.

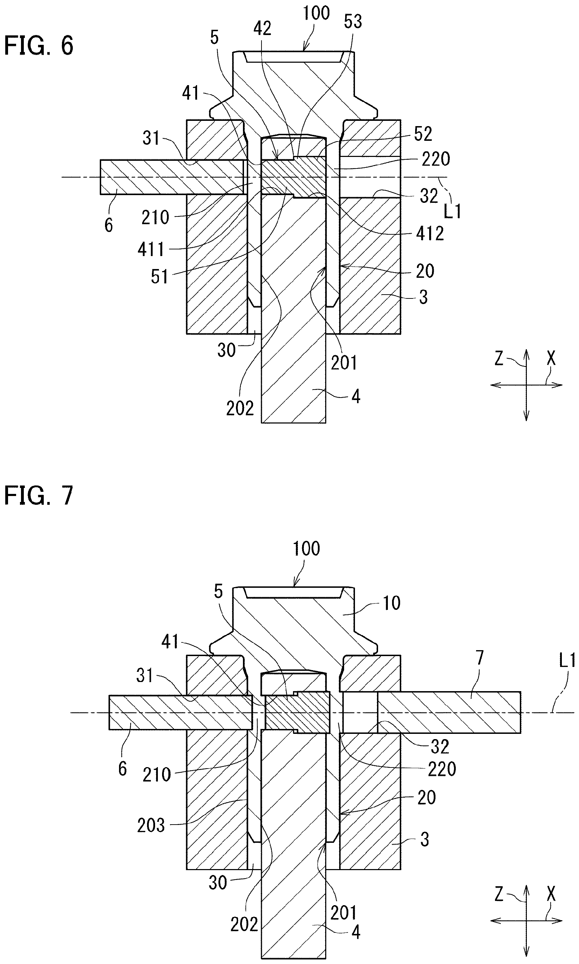

As illustrated in FIG. 3, when the manufacturing method starts, the manufacturer uses a forging machine to process a wire rod by cold forging to shape a workpiece 100 (see FIG. 6) in which the head portion 10, the shaft portion 20, and the vertical hole 201 are formed (step S1).

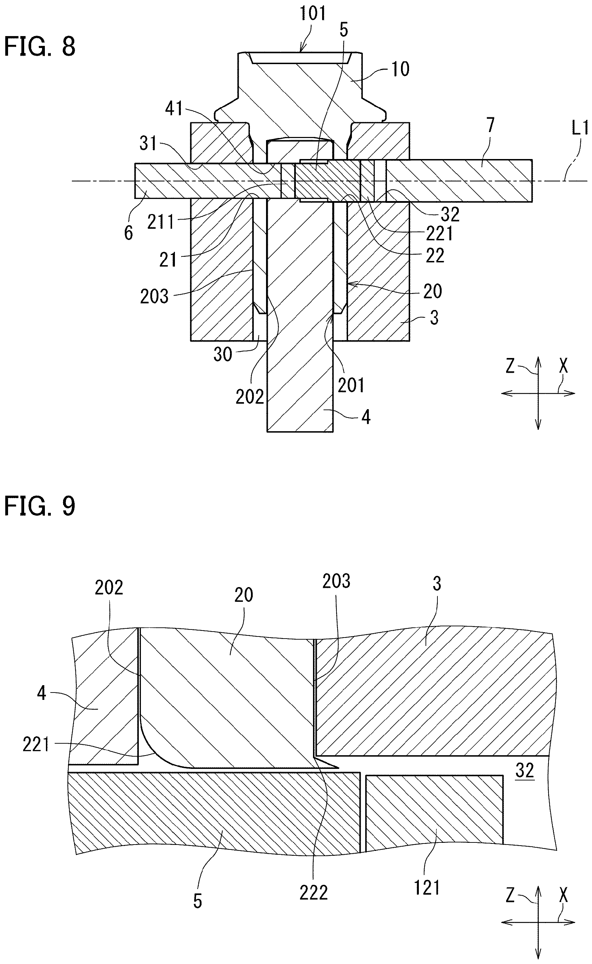

When the workpiece 100 is shaped, the manufacturer uses a working machine to process the workpiece 100 by press working to shape a workpiece 101 (see FIG. 8) in which the two lateral holes 21 and 22 (hereinafter referred to as a first lateral hole 21 and a second lateral hole 22, respectively) are formed in the workpiece 100 (step S2). As shown in FIG. 8, the first lateral hole 21 and the second lateral hole 22 are connected to the outside of the shaft portion 20 and the vertical hole 201. The second lateral hole 22 is located on the opposite side of the first lateral hole 21 with respect to the vertical hole 201, and is configured such that the second lateral hole is larger than the first lateral hole 21 and overlaps the entire first lateral hole when viewed along the second direction X. Details of step S2 will be described later.

When the workpiece 101 is shaped, the manufacturer uses a working machine to process the workpiece 101 by press working to shape a workpiece 102 in which a third lateral hole 23 is formed in the workpiece 101 (step S3). Details of step S3 will be described later.

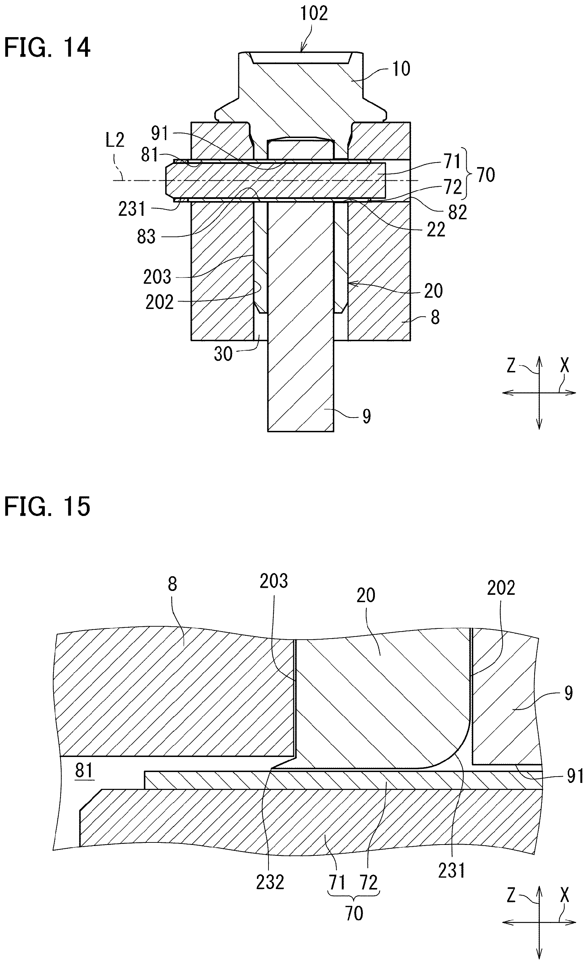

When the workpiece 102 is shaped, the manufacturer uses a rolling machine or a turning machine to process the workpiece 102 (see FIG. 14) by rolling or turning to form the external threaded portion 24 on an outer surface 203 of the shaft portion 20 (step S4), thereby shaping the banjo bolt 1. When the banjo bolt 1 is shaped, the manufacturing method ends.

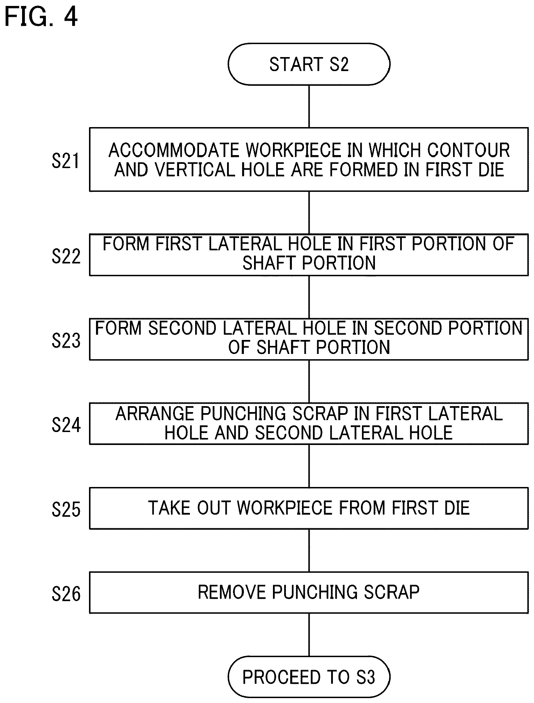

Step S2 will be described with reference to FIG. 4 and FIGS. 6 to 12.

As illustrated in FIG. 4, when step S2 starts, the manufacturer accommodates, in a first die 3, the workpiece 100 in which the head portion 10, the shaft portion 20, and the vertical hole 201 are formed. At this time, as illustrated in FIG. 6, the workpiece 100 is accommodated in the first die 3 in a state where a first mandrel 4 is accommodated in the vertical hole 201.

The first die 3 includes an accommodating portion 30 in which the shaft portion 20 of the workpiece 100 is accommodated, and two through holes (hereinafter referred to as a first through hole 31 and a second through hole 32, respectively) connecting an outside of the first die 3 and the accommodating portion 30. The accommodating portion 30 penetrates the first die 3 in the first direction Z, and has a substantially cylindrical shape having a diameter smaller than that of the flange 12 of the head portion 10. Each of the first through hole 31 and the second through hole 32 penetrates between the outside of the first die 3 and the accommodating portion 30 in the second direction X, and has a substantially cylindrical shape. Each of the first through hole 31 and the second through hole 32 extends along a straight line L1 extending in the second direction X. The second through hole 32 is configured to be larger than the first through hole and overlap the entire first through hole 31, when viewed along the second direction X.

In the first through hole 31, a first punch 6 is accommodated in a movable state along the straight line L1. In the second through hole 32, a third punch 7 is accommodated in a movable state along the straight line L1. Each of the first punch 6 and the third punch 7 has, for example, a substantially cylindrical shape. The third punch 7 has a diameter larger than that of the first punch 6.

The first mandrel 4 has a rod-like shape, and includes a third through hole 41 having a substantially circular shape at an end portion on a side to be accommodated in the vertical hole 201, the third through hole 41 extending along the second direction X and penetrating the first mandrel 4. The third through hole 41 is positioned on the straight line L1 in a state where the first mandrel 4 is accommodated in the vertical hole 201, and one end in the second direction X faces the first through hole 31 and the other end in the second direction X faces the second through hole 32. The third through hole 41 includes two substantially cylindrical holes (hereinafter referred to as a first hole portion 411 and a second hole portion 412) having different diameters. A diameter of the first hole portion 411, close to the first through hole 31, is substantially the same as that of the first through hole 31, and a diameter of the second hole portion 412, close to the second through hole 32, is substantially the same as that of the second through hole 32. A stepped portion 42 is provided at a boundary between the first hole portion 411 and the second hole portion 412.

A working member 5 is accommodated in the third through hole 41 of the first mandrel 4. The working member 5 includes two substantially cylindrical members having different diameters, namely a first members 51 and a second members 52. The first member 51 is accommodated in the first hole portion 411, and the second member 52 is accommodated in the second hole portion 412. A stepped portion 53 is provided at a boundary between the first member 51 and the second member 52. The stepped portion 53 regulates movement of the working member 5 in a direction from the stepped portion 42 of the first mandrel 4 toward the first through hole 31. Both ends of the working member 5 in the second direction X are positioned on substantially the same plane as an outer surface of the first mandrel 4.

When the workpiece 100 is accommodated in the accommodating portion 30 of the first die 3, the manufacturer moves the first punch 6 toward the workpiece 100, processes the shaft portion 20 from one side in the second direction X to form the first lateral hole 21 (step S22), and to form the second lateral hole 22 (step S23). As a result, the workpiece 101 is shaped.

As shown in FIGS. 7 and 8, the first lateral hole 21 is formed in a first portion 210 of the shaft portion 20, and the second lateral hole 22 is formed in a second portion 220 of the shaft portion 20. The first portion 210 is a part of the shaft portion 20 facing the first through hole 31 and the first hole portion 411 of the third through hole 41 in the second direction X. The second portion 220 is a part of the shaft portion 20 facing the second through hole 32 and the second hole portion 412 of the third through hole 41 in the second direction X.

In step S22, for example, the first punch 6 accommodated in the first through hole 31 moves from the first through hole 31 toward the vertical hole 201 along the second direction X. The first punch 6 accommodated in the first through hole 31 is located outside the first portion 210 and faces the first portion 210. As a result, the first portion 210 is processed by the first punch 6, and the first lateral hole 21 is formed.

In step S23, due to the movement of the first punch 6 in step S22, the working member 5 is pressed toward the second portion 220 through a punching scrap 211 of the first lateral hole 21, and moves toward the second portion 220. As a result, the second portion 220 is processed by the working member 5, and the second lateral hole 22 is formed substantially simultaneously with the formation of the first lateral hole 21. In other words, the second lateral hole 22 is formed on and after the first lateral hole 21 is formed.

At the time that the second lateral hole 22 is formed in step S23, as illustrated in FIG. 9, shear droop 221 is generated in at least a part of an opening edge of the second lateral hole 22 in the inner surface 202 of the vertical hole 201. That is, at least a part of the opening edge of the second lateral hole 22 is chamfered. A burr-shaped protrusion 222 is formed on at least a part of the opening edge of the second lateral hole 22 on the outer surface 203 of the shaft portion 20. The protrusion 222 extends from the outer surface 203 of the shaft portion 20 toward the second through hole 32 along the second direction X.

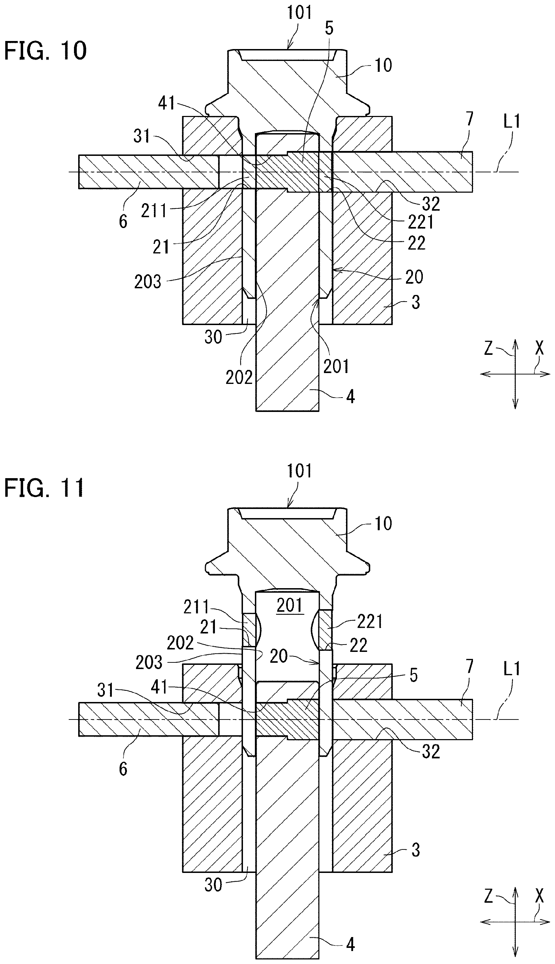

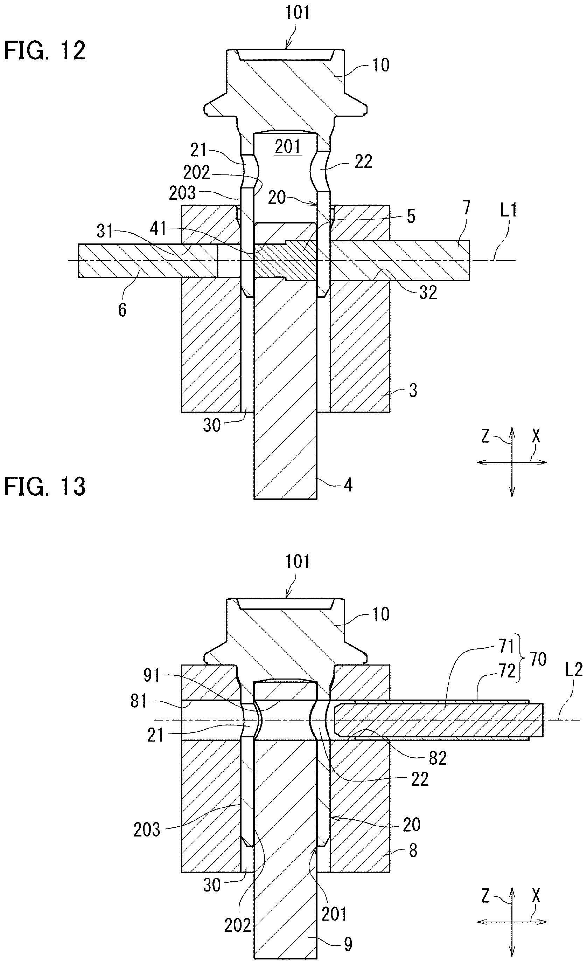

When the second lateral hole 22 is formed, as shown in FIG. 10, the manufacturer moves the third punch 7 toward the vertical hole 201, positions the punching scrap 211 of the first lateral hole 21 in the first lateral hole 21, and positions the punching scrap 221 of the second lateral hole 22 in the second lateral hole 22 (step S24). When the punching scrap 211 is positioned in the first lateral hole 21 and the punching scrap 221 is positioned in the second lateral hole 22, the manufacturer takes out the workpiece 100 from the accommodating portion 30 of the first die 3 as illustrated in FIG. 11 (step S25), removes the punching scraps 211 and 221 as illustrated in FIG. 12 (step S26), and proceeds to step S3.

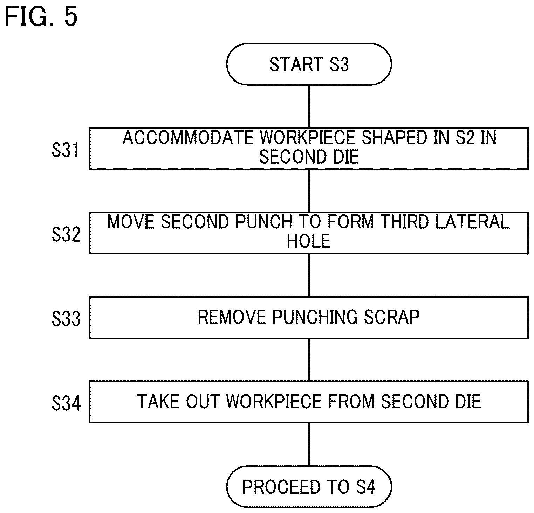

Step S3 will be described with reference to FIG. 5 and FIGS. 13 to 16.

As illustrated in FIG. 5, when step S3 starts, the manufacturer accommodates the workpiece 101, shaped in step S2, in the accommodating portion 30 of the second die 8 (step S31). At this time, as illustrated in FIG. 13, the workpiece 101 is accommodated in the second die 8 in a state where a second mandrel 9 is accommodated in the vertical hole 201.

The second die 8 includes an accommodating portion 30 in which the shaft portion 20 of the workpiece 101 is accommodated, and two through holes (hereinafter referred to as a fourth through hole 81 and a fifth through hole 82, respectively) connecting an outside of the first die 3 and the accommodating portion 30 of the second die 8. Each of the fourth through hole 81 and the fifth through hole 82 penetrates between the outside of the second die 8 and the accommodating portion 30 of the second die 8 in the second direction X, and has a substantially cylindrical shape. Each of the fourth through hole 81 and the fifth through hole 82 extends along a straight line L2 extending in the second direction X, and has substantially the same size as that of the second through hole 32 of the first die 3.

In the fifth through hole 82, a second punch 70 is accommodated in a state where it is movable along the straight line L2. That is, the second punch 70 is located outside the second lateral hole 22 in the second direction X and faces the second lateral hole 22. The second punch 70 includes a guide pin 71 and a sleeve-shaped punch 72 surrounding the guide pin 71 around the longitudinal direction. The second punch 70 is configured to be larger than the first punch 6 and is configured to be insertable into the second lateral hole.

The second mandrel 9 has a rod-like shape, and includes a sixth through hole 91 having a substantially circular shape extending along the second direction X and penetrating the second mandrel 9, at an end on a side to be accommodated in the vertical hole 201. The sixth through hole 91 is positioned on the straight line L2 in a state where the second mandrel 9 is accommodated in the vertical hole 201, and one end in the second direction X faces the first through hole 31 and the other end in the second direction X faces the second through hole 32. The sixth through hole 91 has a diameter substantially equal to the sizes of the fourth through hole 81 and the fifth through hole 82.

When the workpiece 101 is accommodated in the accommodating portion 30 of the second die 8, the manufacturer processes a portion of the shaft portion 20 where the first lateral hole 21 is formed from the other side in the second direction X through the second lateral hole 22 to form the third lateral hole 23 larger than the first lateral hole 21 and similar to the second lateral hole 22 when viewed along the second direction X (step S32). As a result, the workpiece 102 is shaped. As shown in FIG. 14, when the second punch 70 is moved toward the first lateral hole 21 through the second lateral hole 22 along the second direction X, a periphery of the first lateral hole 21 of the shaft portion 20 is broken by the second punch 70. As a result, the third lateral hole 23 is formed.

As shown in FIG. 15, shear droop 231 is formed on at least a part of an opening edge of the third lateral hole 23 on the inner surface 202 of the vertical hole 201. That is, at least a part of the opening edge of the third lateral hole 23 is chamfered. A burr-shaped protrusion 232 is formed on at least a part of the opening edge of the third lateral hole 23 on the outer surface 203 of the shaft portion 20. The protrusion 232 extends from the outer surface 203 of the shaft portion 20 toward the second through hole 32 along the second direction X.

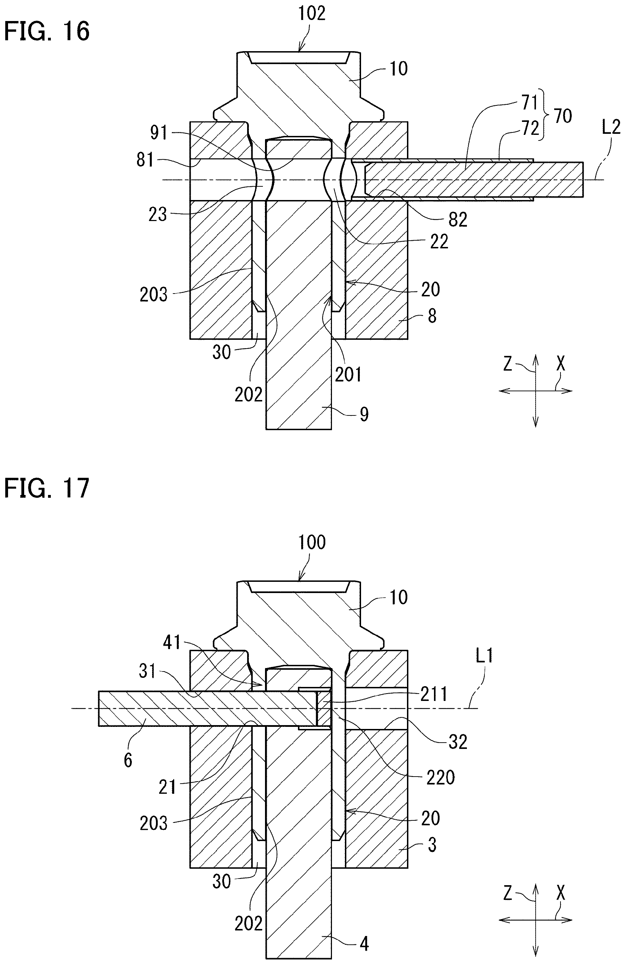

When the third lateral hole 23 is formed, the manufacturer removes a punching scrap 231 of the third lateral hole 23 (step S33). When the punching scrap 231 is removed, as illustrated in FIG. 16, the manufacturer moves the second punch 70 toward the fifth through hole 82, takes out the workpiece 102 from the accommodating portion 30 of the second die 8 (step S34), and proceeds to step S4.

The protrusion 222 at the opening edge of the second lateral hole 22 and the protrusion 232 at the opening edge of the third lateral hole 23 are removed by, for example, barrel processing. The removal of the protrusions 222 and 232 is performed, for example, between steps S3 and S4 in FIG. 3 or after step S4.

The manufacturing method of the present disclosure can exhibit the following advantageous effects.

The manufacturing method includes the following steps. With the manufacturing method as described above, the banjo bolt 1 can be manufactured so as not to prevent burrs and barbs to be generated at portions where the vertical hole 201 intersects the second lateral hole 22 and the third lateral hole 23.

Forming the first lateral hole 21 and the second lateral hole 22 by processing the shaft portion 20 from one side in the second direction X, the first lateral hole 21 extending in the second direction X and connecting the outside of the shaft portion 20 and the vertical hole 201, the second lateral hole being located on the opposite side of the first lateral hole 21 with respect to the vertical hole 201 and extending in the second direction X and connecting the outside of the shaft portion 20 and the vertical hole 201. The second lateral hole 22 is formed so as to be larger than the first lateral hole 21 and overlap the entire first lateral hole when viewed along the second direction X.

Forming the third lateral hole 23 by processing the portion of the shaft portion 20 where the first lateral hole 21 is formed from the other side in the second direction X through the second lateral hole 22. The third lateral hole 23 is formed to be larger than the first lateral hole 21 and to be similar to the second lateral hole 22 when viewed along the second direction X.

When the two lateral holes 22 and 23 of the banjo bolt 1 are formed by, for example, being processed from the outside of the banjo bolt 1 toward the vertical hole 201, there is a possibility that burrs and barbs are generated at the intersection between the vertical hole 201 and either of the two lateral holes 22 and 23. In the case of removing burrs and barbs generated inside the banjo bolt 1, it is necessary to perform removal processing on each of the banjo bolts 1 in which burrs and barbs are generated, and there is a possibility that the manufacturing efficiency of the banjo bolt 1 is greatly reduced. Therefore, by the manufacturing method of the present disclosure, it is possible to realize a method of manufacturing the banjo bolt 1 with high manufacturing efficiency. Moreover, it is difficult to completely remove burrs and barbs generated inside the banjo bolt 1. Therefore, by the manufacturing method of the present disclosure, it is possible to manufacture the high-quality banjo bolt 1.

The manufacturing method includes the following steps. With the manufacturing method as described above, the banjo bolt 1 can be manufactured so as not to prevent burrs and barbs to be generated in a more reliable manner at portions where the vertical hole 201 intersects the second lateral hole 22 and the third lateral hole 23.

Forming the first lateral hole 21 by moving the first punch 6 toward the vertical hole 201 along the second direction X, the first punch 6 being located outside in the second direction of the first portion 210 of the shaft portion 20 where the first lateral hole 21 is formed and facing the first portion 210.

Moving the first punch 6 along the second direction X toward the second portion 220 of the shaft portion 20 where the second lateral hole 22 is formed. Moving the working member 5 positioned inside the vertical hole 201 and facing the second portion 220 toward the second portion 220 by the movement of the first punch 6 to form the first lateral hole 21 and form the second lateral hole 22 at substantially the same time.

The manufacturing method includes the following steps. With the manufacturing method as described above, the banjo bolt 1 can be manufactured so as not to prevent burrs and barbs to be generated in a more reliable manner at portions where the vertical hole 201 intersects the second lateral hole 22 and the third lateral hole 23.

On and after the second lateral hole 22 is formed, moving the second punch 70 that is located outside the second lateral hole 22 in the second direction X, faces the second lateral hole 22, is larger than the first punch 6, and is insertable into the second lateral hole 22 toward the first lateral hole 21 through the second lateral hole 22 along the second direction X to form the third lateral hole 23.

The manufacturing method of the present disclosure may be configured as follows.

The second lateral hole 22 is not limited to be formed using the working member 5, and may be formed, for example, as shown in FIGS. 17 to 19. In this manner, the second lateral hole 22 may be formed with a simpler configuration.

As shown in FIG. 17, after the first lateral hole 21 is formed, the first punch 6 is moved along the second direction X toward the second portion 220 of the shaft portion 20 where the second lateral hole 22 is formed. At this time, the punching scrap 211 of the first lateral hole 21 moves together with the first punch 6. That is, the punching scrap 211 moves toward the second portion 220 by the movement of the first punch 6.

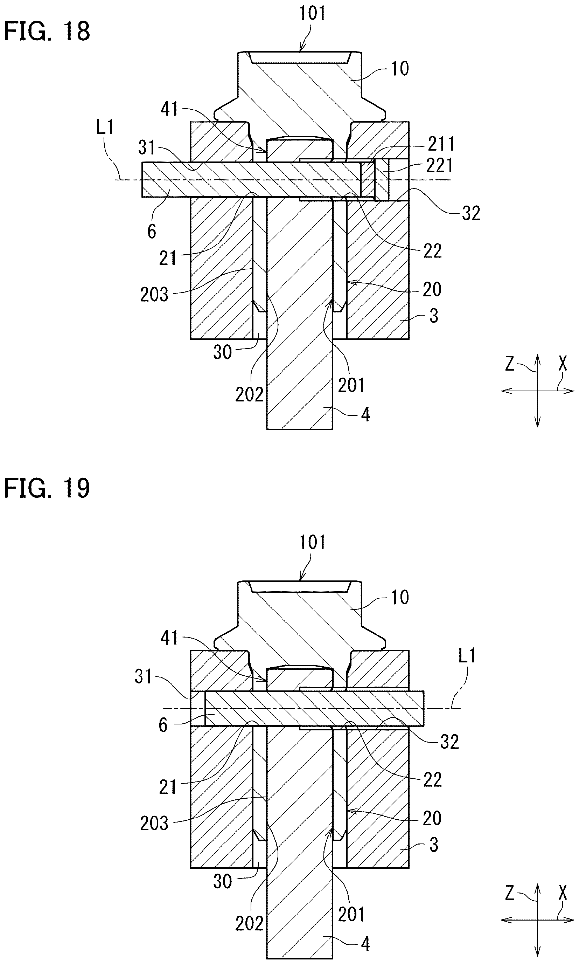

As illustrated in FIG. 18, the first punch 6 is moved to the inside of the second through hole 32 in the second direction X. By the movement of the first punch 6, the second portion 220 is pressed by the punching scrap 211 and sheared, and the second lateral hole 22 is formed.

As shown in FIG. 19, the first punch 6 is moved to the outside of the first die 3 along the second direction X to remove the punching scrap 211 of the first lateral hole 21 and the punching scrap 221 of the second lateral hole 22.

Each of the first lateral hole 21, the second lateral hole 22, and the third lateral hole 23 is not limited to have a substantially circular shape, and may have any shape such as an elliptical shape.

Various embodiments of the present disclosure have been described above in detail with reference to the drawings. Finally, various aspects of the present disclosure will be described.

A manufacturing method according to a first aspect of the present disclosure is a method of manufacturing a banjo bolt that includes a shaft portion including a vertical hole, the vertical hole being provided in the shaft portion and extending in a first direction, the method including:
forming a first lateral hole and a second lateral hole by processing the shaft portion from one side in a second direction crossing the first direction, the first lateral hole extending in the second direction and connecting an outside of the shaft portion and the vertical hole, the second lateral hole being located on an opposite side of the first lateral hole with respect to the vertical hole and extending in the second direction and connecting the outside of the shaft portion and the vertical hole, the second lateral hole being larger than the first lateral hole and overlapping the entire first lateral hole when viewed along the second direction; and
forming a third lateral hole by processing a portion of the shaft portion where the first lateral hole is formed from the other side in the second direction through the second lateral hole, the third lateral hole being larger than the first lateral hole and similar to the second lateral hole when viewed along the second direction.

A manufacturing method according to a second aspect of the present disclosure includes
forming the first lateral hole by moving a first punch toward the vertical hole along the second direction, the first punch being located outside in the second direction of a first portion of the shaft portion where the first lateral hole is formed and facing the first portion; and
forming the second lateral hole at almost the same time as forming the first lateral hole by moving the first punch along the second direction toward a second portion of the shaft portion where the second lateral hole is formed and moving a working member, located inside the vertical hole and facing the second portion, toward the second portion by the movement of the first punch.

A manufacturing method according to a third aspect of the present disclosure includes
forming the first lateral hole by moving a first punch toward the vertical hole along the second direction, the first punch being located outside in the second direction of a first portion of the shaft portion where the first lateral hole is formed and facing the first portion; and
on and after the first lateral hole is formed, forming the second lateral hole by moving the first punch along the second direction toward a second portion of the shaft portion where the second lateral hole is formed and moving a punching scrap of the first lateral hole toward the second portion by the movement of the first punch.

A manufacturing method according to a fourth aspect of the present disclosure includes
on and after the second lateral hole is formed, forming the third lateral hole by moving a second punch toward the first lateral hole through the second lateral hole along the second direction, the second punch being located outside the second lateral hole in the second direction, facing the second lateral hole, and being larger than the first punch and insertable into the second lateral hole.

### REFERENCE SIGNS LIST

- 1: banjo bolt
- 3: first die
- 4: first mandrel
- 5: working member
- 51: first member
- 52: second member
- 53: step portion
- 6: first punch
- 7: third punch
- 8: second die
- 9: second mandrel
- 10: head portion
- 11: screw head
- 12: flange
- 20: shaft portion
- 201: vertical hole
- 202: inner surface
- 203: outer surface
- 204: opening
- 210: first portion
- 211: punching scrap
- 220: second portion
- 221: punching scrap
- 21: first lateral hole
- 22: second lateral hole
- 23: third lateral hole
- 24: external threaded portion
- 30: accommodating portion
- 31: first through hole
- 32: second through hole
- 41: third through hole
- 411: first hole portion
- 412: second hole portion
- 42: step portion
- 70: second punch
- 71: guide pin
- 72: sleeve punch
- 81: fourth through hole
- 82: fifth through hole
- 91: sixth through hole
- 231: punching scrap

## Claims

1. A method of manufacturing a banjo bolt that includes a shaft portion including a vertical hole, the vertical hole being provided in the shaft portion and extending in a first direction, the method, comprising:
forming a first lateral hole and a second lateral hole by processing the shaft portion from a first side in a second direction crossing the first direction, the first lateral hole extending in the second direction and connecting an outside of the shaft portion and the vertical hole, the second lateral hole being located on an opposite side of the first lateral hole with respect to the vertical hole and extending in the second direction and connecting the outside of the shaft portion and the vertical hole, the second lateral hole being larger than the first lateral hole and overlapping the entire first lateral hole when viewed along the second direction; and
forming a third lateral hole by processing a portion of the shaft portion where the first lateral hole is formed from a second side in the second direction through the second lateral hole, the third lateral hole being larger than the first lateral hole and similar to the second lateral hole when viewed along the second direction.

2. The method according to claim 1, comprising
forming the first lateral hole by moving a first punch toward the vertical hole along the second direction, the first punch being located outside in the second direction of a first portion of the shaft portion where the first lateral hole is formed and facing the first portion; and
forming the second lateral hole at almost the same time as forming the first lateral hole by moving the first punch along the second direction toward a second portion of the shaft portion where the second lateral hole is formed and moving a working member, located inside the vertical hole and facing the second portion, toward the second portion by the movement of the first punch.

3. The method according to claim 1, comprising
forming the first lateral hole by moving a first punch toward the vertical hole along the second direction, the first punch being located outside in the second direction of a first portion of the shaft portion where the first lateral hole is formed and facing the first portion; and
on and after the first lateral hole is formed, forming the second lateral hole by moving the first punch along the second direction toward a second portion of the shaft portion where the second lateral hole is formed and moving a punching scrap of the first lateral hole toward the second portion by the movement of the first punch.

4. The method according to claim 2 or 3, comprising
on and after the second lateral hole is formed, forming the third lateral hole by moving a second punch toward the first lateral hole through the second lateral hole along the second direction, the second punch being located outside the second lateral hole in the second direction, facing the second lateral hole, and being larger than the first punch and insertable into the second lateral hole.
